# FASCICULE DE BREVET EUROPEEN

(11) **EP 1 340 676 B1**
(45) Date de publication et mention de la délivrance du brevet: **01.06.2005**
(21) Numéro de dépôt: 03290413.8
(22) Date de dépôt: 20.02.2003
(51) Int. Cl.: B64C 25/16, B64C 7/00

(54) **Train d'atterrissage d'aéronef à système autonome de carénage aéroacoustique**
Flugzeugfahrwerk mit einem autonomen, aeroakustischen Verkleidungssystem
Aircraft landing gear with an autonomous aero-acoustic fairing system

(30) Priorité: 01.03.2002 FR 0202634
(43) Date de publication de la demande: 03.09.2003
(73) Titulaire: MESSIER-DOWTY SA, F-78140 Velizy Villacoublay (FR)
(72) Inventeur: Courtois, Maud, 75012 Paris (FR); Ducos, Dominique, 91600 Savigny sur Orge (FR)
(74) Mandataire: Jaunez, Xavier

(56) Documents cités:
- EP-A- 1 067 045
- US-A- 2 180 462

## Description

La présente invention concerne le domaine des trains d'atterrissage d'aéronef à jambe de train relevable.

Plus particulièrement, l'objet de l'invention concerne un train d'atterrissage dont la jambe comporte un caisson à tige télescopique qui est articulé sur une structure d'aéronef pour pivoter entre une position train haut et une position train bas par l'actionnement d'un vérin de manoeuvre associé, ledit caisson étant en outre relié à la structure d'aéronef par des éléments de contreventement articulés qui comprennent une contrefiche dont un bras supérieur est articulé sur la structure d'aéronef et un bras inférieur est articulé sur un appendice associé du caisson de la jambe de train, ledit train comportant en outre un système de carénage aéroacoustique comprenant un carénage articulé en deux parties complémentaires reliées l'une à l'autre par une articulation, conformément au préambule de la revendication 1.

Le terme « aéroacoustique » est classiquement utilisé par des spécialistes du domaine, pour tous les traitements acoustiques, par des moyens aérodynamiques, visant à diminuer les bruits. Pour les anglo-saxons, la terminologie « carénage aéroacoustique » correspond à l'expression « low noise fairing ».

Dans la procédure d'approche d'un aéronef, la sortie des trains d'atterrissage offre une prise au vent qui s'accroît au fur et à mesure que les jambes de train descendent, jusqu'à leur position train bas verrouillée. Ces éléments en saillie de la partie inférieure du fuselage génèrent inévitablement des bruits aérodynamiques, lesquels sont plus ou moins importants en fonction de l'importance des surfaces concernées.

Les contraintes d'environnement amènent les constructeurs à pousser de plus en plus les recherches pour réduire au minimum les nuisances lors des procédures d'approche et en particulier les bruits aérodynamiques. Très schématiquement, on considère maintenant qu'en approche 50 % des bruits proviennent de la motorisation de l'aéronef, 25 % de la structure dudit aéronef (voilure, volets, dérives), et 25 % du train d'atterrissage. Ces chiffres résultent des progrès considérables accomplis par les motoristes dans la réduction des bruits émis par les réacteurs, lesquels étaient considérablement plus élevés auparavant. Il s'ensuit que les bruits aérodynamiques de la structure et du train d'atterrissage prennent une importance qu'ils n'avaient pas auparavant.

La présente invention vise à concevoir un train du type précité dont la géométrie permet une diminution sensible des bruits aérodynamiques générés lors de la sortie du train, et en particulier par les jambes de train en position train bas.

La résolution de ce problème est compliquée par la présence de parties des trains d'atterrissage qui sont généralement fortement génératrices de turbulences, lesquelles turbulences constituent des sources de bruits aérodynamiques indésirables tels que des sifflements plus ou moins stridents.

On pourrait certes imaginer fixer des caches déflecteurs anti-turbulences sur différentes parties en saillie, mais cette approche ne donnerait pas pleinement satisfaction dans la mesure où les zones d'articulation ne pourraient pas être concernées, sinon de tels caches viendraient interférer avec les mouvements de relevage et de sortie du train d'atterrissage. Ceci est encore plus sensible pour l'articulation principale des bras de la contrefiche reliant classiquement la jambe de train à la structure d'aéronef, car d'une part cette zone d'articulation présente un dimensionnement non négligeable, et par suite est fortement génératrice de turbulences, mais cette zone d'articulation doit pouvoir également rester accessible en position train haut dans la mesure où il faut préserver son accessibilité pour le verrouillage en position train haut du train d'atterrissage au moyen d'un boîtier d'accrochage fixé dans la soute associée.

L'état de la technique le plus proche est illustré par le document US 2 180 462 A, qui enseigne un train d'atterrissage conforme au préambule de la revendication 1.

Plus précisément, ce document décrit un atterrisseur principal de voilure à relevage vers l'arrière. Des carénages formant une partie d'un bossage aérodynamique destiné à entourer l'atterrisseur en position relevée sont solidaires de l'atterrisseur et recouvrent partiellement celui-ci lorsque l'atterrisseur est en position train bas. Dans un mode de réalisation illustré aux figures 8, 9, 10, deux parties de carénage sont installées sur les branches du compas, chacune de ces parties étant solidaire d'une branche de compas et formant un habillage du compas.

Cependant, les parties de carénage du système antérieur ne forment pas un ensemble autonome. De plus, il convient de noter que ces parties ne sont pas articulées entre elles, et que lesdites parties ne servent pas à recouvrir l'articulation de la contrefiche qui, en l'espèce, est à l'arrière de l'atterrisseur.

On pourra également se référer au document EP-1 067 045 A qui illustre un agencement de moyens de réduction de bruit sous la forme de carénages pour dévier l'air des parties génératrices de bruit.

L'invention a pour objet de concevoir un train d'atterrissage plus performant, dont la géométrie permet une forte diminution des bruits aérodynamiques générés lors des procédures d'approche de l'aéronef.

Ce problème est résolu conformément à l'invention grâce à un train d'atterrissage d'aéronef tel que défini à la revendication 1.

Conformément à un mode d'exécution préféré, les quatre articulations concernées des parties complémentaires, de la bielle de liaison, et des bras de la contrefiche sont agencées pour former un parallélogramme articulé.

Avantageusement alors, en position train bas, la première partie du carénage articulé recouvre la partie basse du bras inférieur de la contrefiche, la partie haute dudit bras inférieur et la partie basse du bras supérieur de ladite contrefiche étant quant à elles recouvertes par la seconde partie dudit carénage articulé. En particulier, la première partie du carénage articulé se termine par un bord relevé enveloppant en partie la zone d'articulation du bras inférieur de la contrefiche, l'autre partie de ladite zone d'articulation étant quant à elle recouverte par un carénage rigide associé au caisson de la jambe de train et faisant également partie du système de carénage aéroacoustique.

Avantageusement encore, la seconde partie du carénage articulé présente un bombement central qui, en position train bas, enveloppe l'articulation entre les deux bras de la contrefiche. En particulier, ladite seconde partie du carénage articulé présente, du côté intérieur, des raidisseurs longitudinaux concernant au moins la zone du bombement central.

De préférence encore, la bielle de liaison est articulée entre un point d'extrémité de la seconde partie du carénage articulé, et une attache associée fixée sur le bras supérieur de la contrefiche en un point complétant le parallélogramme articulé. En particulier, la bielle de liaison pivote autour de son articulation sur l'attache de liaison au bras supérieur, et autour de son point d'accrochage à la seconde partie du carénage articulé, sur une plage d'environ 150° entre les deux positions de ladite bielle correspondant aux positions train haut et train bas de la jambe de train.

La bielle de liaison pourra être une bielle rigide, ou en variante être une bielle réglable en longueur ou une bielle élastique à ressort.

Avantageusement enfin, en position train bas, les deux parties complémentaires du carénage articulé sont sensiblement dans le prolongement l'une de l'autre.

D'autres caractéristiques et avantages de l'invention apparaîtront plus clairement à la lumière de la description qui va suivre et des dessins annexés, concernant un mode d'exécution particulier, en référence aux figures où :
- la figure 1 est une vue en perspective montrant un train d'atterrissage (en l'espèce un train avant), en position train bas, équipé conformément à l'invention d'un système autonome de carénage aéroacoustique incluant un carénage articulé en deux parties complémentaires ;
- la figure 2 est une vue en élévation du train précité correspondant à la même position train bas de la figure 1 ;
- les figures 3 et 4 sont des vues respectivement en perspective et en élévation montrant le train précité dans une position intermédiaire entre les positions train haut et train bas, lesdites vues permettant de mieux apprécier le mouvement relatif des deux parties complémentaires constituant le carénage articulé, avec la bielle de liaison qui y est associée, les quatre points d'articulation concernés formant un parallélogramme illustré en traits mixtes sur la figure 4 ;
- la figure 5 est une vue en élévation du même train en position train haut, le carénage articulé étant alors totalement replié sur lui-même ;
- la figure 6 est une vue partielle en perspective de la zone d'articulation de la contrefiche principale en position train bas, cette contrefiche étant vue selon la flèche VI de la figure 1, permettant de mieux distinguer les moyens de fixation des deux parties constituant le carénage articulé ;
- la figure 7 est une vue partielle en élévation, montrant, à plus grande échelle, le carénage articulé précité dans sa position repliée sur lui-même, position qui correspond à la position train haut de la figure 5.

Sur les figures, on distingue un train d'atterrissage d'aéronef T qui est du type à jambe de train relevable. En l'espèce, il s'agit d'une jambe qui est à relevage vertical, c'est-à-dire que son caisson peut pivoter autour d'un axe transversal perpendiculaire au plan longitudinal médian de l'aéronef. Dans le cas particulier présentement décrit et illustré, il s'agit d'une jambe de train avant, ce qui explique la présence de mécanismes directionnels.

On va tout d'abord rappeler brièvement les éléments structurels du train d'atterrissage qui sont de type connu.

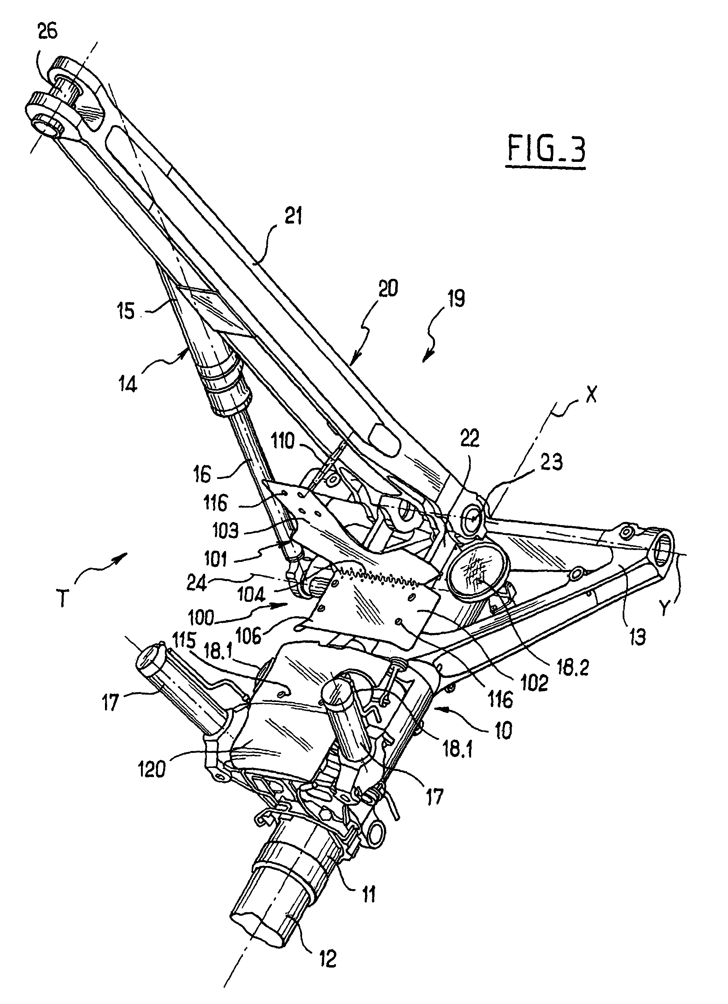

Le train d'atterrissage T comporte ainsi une jambe de train 10 comprenant un caisson 11 d'axe X à tige télescopique 12. La tige télescopique 12 n'est que partiellement représentée, mais il est bien connu de l'homme de l'art que cette tige télescopique se termine par une paire de roues pour une jambe de train avant. La partie haute du caisson 11 comprend deux branches triangulaires 13 qui définissent l'axe transversal d'articulation Y autour duquel peut pivoter la jambe de train 10, entre une position train haut et une position train bas. Le mouvement de la jambe de train entre ces deux positions extrêmes est obtenu par actionnement d'un vérin de manoeuvre associé 14, mieux représenté sur la vue de la figure 3. Le corps 15 du vérin de manoeuvre 14 est articulé sur un point de la structure d'aéronef non représenté, et la tige 16 du vérin est articulée sur un axe 24 parallèle à l'axe Y de pivotement de la jambe de train 10.

On distingue en outre des équipements classiques, tels qu'une paire de vérins d'axe horizontal 17, montés en push pull, pour commander l'orientation de la paire de roues. On distingue également des éléments d'éclairage tels que les projecteurs 18.1 et 18.2.

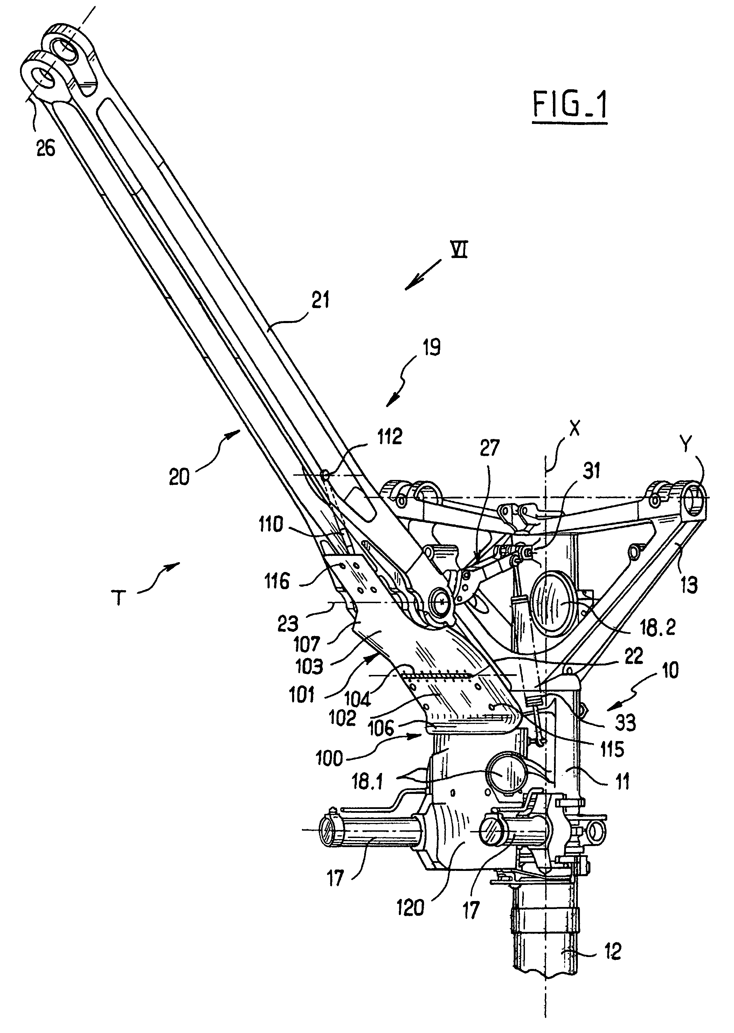

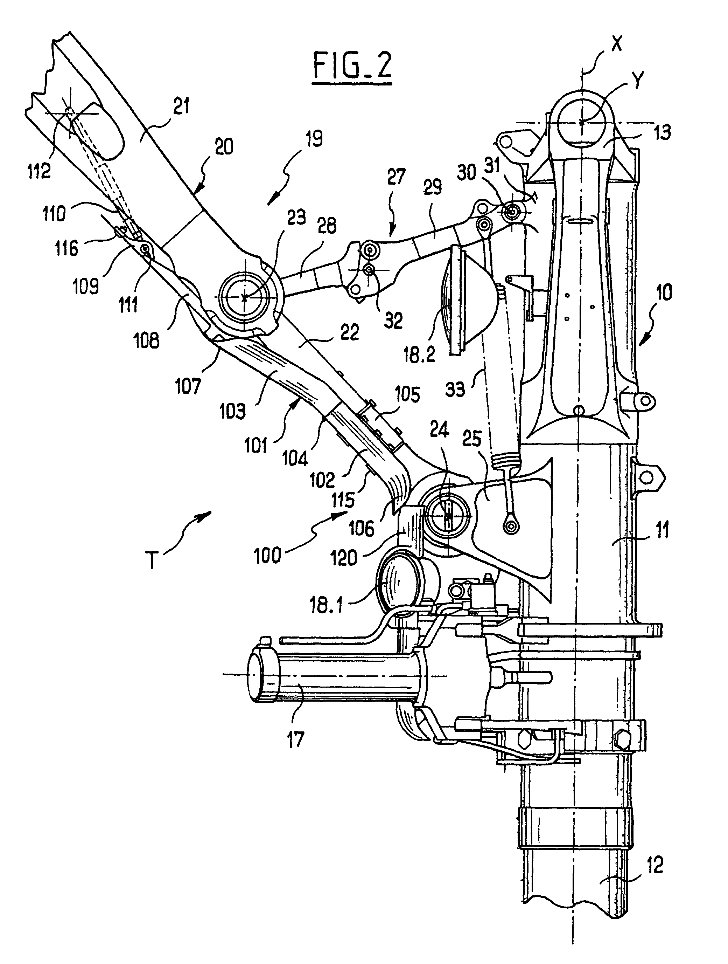

Le caisson 11 de la jambe de train est en outre relié à la structure d'aéronef par des éléments de contreventement articulés référencés 19. En l'espèce, ces éléments de contreventement comprennent une contrefiche principale 20 constituée d'un bras supérieur 21 et d'un bras inférieur 22 reliés entre eux au niveau d'une articulation autour d'un axe 23. Le bras supérieur 21 de la contrefiche principale 20 est articulé sur la structure d'aéronef en un point 26 seulement visible sur les figures 1 et 3, et le bras inférieur 22 est articulé sur un appendice associé 25 du caisson 11 de la jambe de train. Un alignement 27 est en outre associé à la contrefiche principale 20, lequel alignement est ici constitué d'une contrefiche secondaire de plus petite dimension, comportant deux bras 28 et 29 articulés entre eux en un point 32, le bras 28 étant articulé à son autre extrémité au niveau de l'axe 23 d'articulation des deux bras 21, 22 de la contrefiche principale 20, tandis que le bras 29 est articulé à son autre extrémité en 30 sur un appendice 31 du caisson de jambe 11. Des ressorts 33 sont associés à ce dernier bras 29 de l'alignement 27 pour maintenir la position stable dans laquelle les deux bras 21, 22 de la contrefiche principale 20 se trouvent en position train bas, position qui est illustrée sur les figures 1 et 2.

Conformément à une caractéristique essentielle de l'invention, le train d'atterrissage T comporte un système autonome de carénage aéroacoustique noté 100, qui est destiné, lorsque la jambe 10 est en position train bas, à recouvrir l'avant d'au moins une partie d'articulation des éléments de contreventement 19.

En l'espèce, sur le mode d'exécution qui est représenté ici, le système de carénage aéroacoustique 100 comprend un carénage articulé 101 en deux parties complémentaires 102, 103, reliées l'une à l'autre par une articulation 104, et un autre carénage rigide 120 quant à lui rigidement solidaire du caisson 11.

En l'espèce, le carénage articulé 101 du système autonome de carénage aéroacoustique 100 recouvre, en position train bas, l'avant de la zone d'articulation entre les bras supérieur 21 et inférieur 22 de la contrefiche principale 20, ainsi que cela est bien visible sur les figures 1 et 2. Le carénage articulé 101 comprend ainsi deux parties complémentaires 102, 103, dont une première partie 102 qui est rigidement solidaire du bras inférieur 22 de la contrefiche principale 20, et une seconde partie 103 qui est reliée par une bielle 110 au bras supérieur 21 de ladite contrefiche. La bielle 110 est articulée au niveau de ses deux extrémités, en 111 sur la deuxième partie 103 du carénage articulé 101, et en 112 sur un élément de membrure du bras supérieur 21 de la contrefiche principale 20.

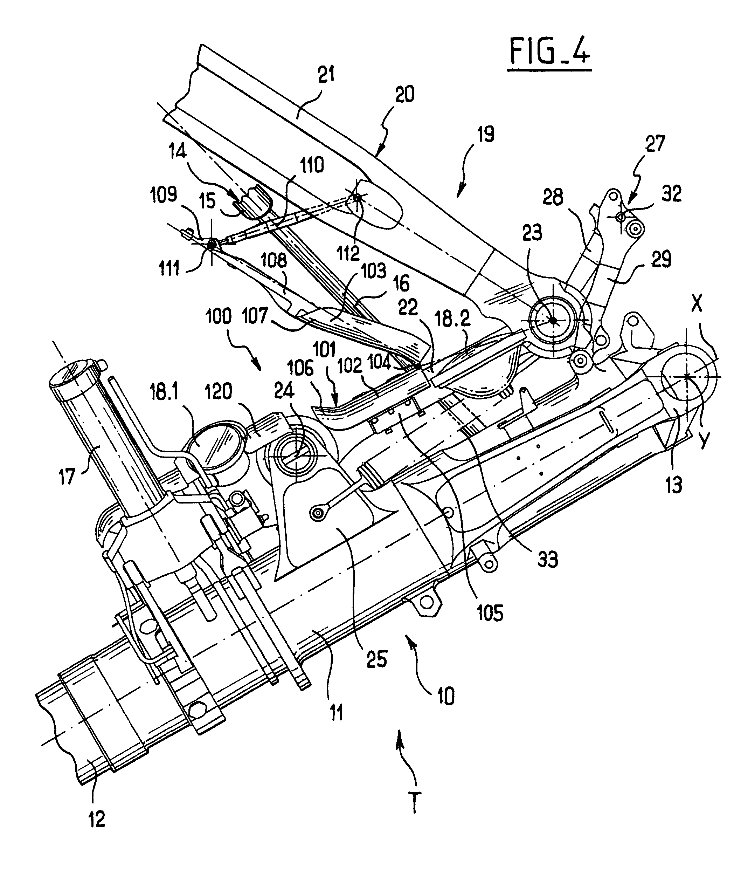

On est alors en présence de quatre articulations au niveau des points 23, 104, 111, 112, qui correspondent à quatre axes parallèles à l'axe Y de pivotement de la jambe de train, ces quatre articulations formant un parallélogramme articulé qui se déforme lors du mouvement de pivotement de la jambe de train. Ce parallélogramme a été illustré en traits mixtes sur la vue de la figure 4, qui correspond à une position intermédiaire à environ 60° de rentrée de la jambe de train.

En position train bas, tel que cela est visible sur les figures 1 et 2, la première partie 102 du carénage articulé 101 recouvre la partie basse du bras inférieur 22 de la contrefiche principale 20, la partie haute dudit bras inférieur et la partie basse du bras supérieur 21 de ladite contrefiche étant quant à elles recouvertes par la seconde partie 103 dudit carénage articulé. On constate également que la première partie 102 du carénage articulé 101 se termine par un bord relevé ou béquet 106 qui enveloppe en partie la zone d'articulation du bras inférieur 22 de la contrefiche principale 20, l'autre partie de ladite zone d'articulation étant quant à elle recouverte par le carénage rigide 120 qui est associé au caisson 11 de la jambe de train, et fait également partie du système autonome de carénage aéroacoustique 100. Pour envelopper correctement la zone d'articulation de l'axe 23 entre les deux bras 21, 22 de la contrefiche principale 20, la seconde partie 103 de carénage articulé 101 doit présenter une géométrie adaptée. Il est ainsi prévu à cet effet un bombement central 107 qui, en position train bas, enveloppe l'articulation entre les deux bras 21, 22 de la contrefiche principale 20. Cette seconde partie 103 du carénage articulé 101 présente une longueur non négligeable, et il est en outre avantageux de prévoir, du côté intérieur, des raidisseurs longitudinaux 108 concernant au moins la zone du bombement central 107.

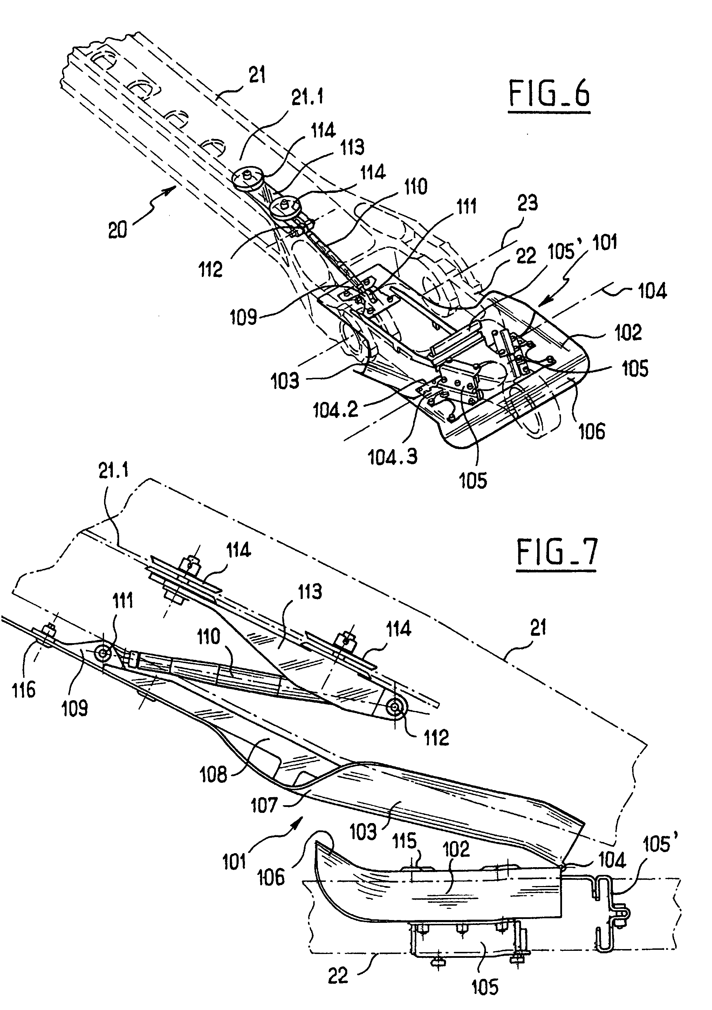

Les figures 6 et 7 permettent de mieux appréhender les moyens de fixation du carénage articulé 101 aux bras 21, 22 de la contrefiche principale 20, la figure 6 correspondant à un alignement des bras 21, 22, conformément à la position train bas, tandis que la figure 7 correspond à un repliage des bras 21, 22 de ladite contrefiche, correspondant à une position train haut.

Une ferrure 113, ayant une section en forme de U renversé, est fixée par des attaches 114 sur une membrure centrale 21.1 du bras supérieur 21 de la contrefiche principale 20. La bielle de liaison 110 est articulée en 112 en extrémité de cette ferrure 113. A son autre extrémité, la bielle de liaison 110 est articulée en un point d'extrémité 111 de la seconde partie 103 du carénage articulé 101, au niveau d'un appendice 109 de celle-ci, qui est vissé par des boulons 116. Il est à noter que l'attache 113 peut être immédiatement montée sur un train d'atterrissage existant, dont l'environnement est disponible.

La figure 6 permet de mieux distinguer les deux raidisseurs 108 qui sont parallèles à la direction longitudinale des bras de la contrefiche principale 20, et espacés suffisamment entre eux pour laisser passer la zone d'articulation entre ces deux bras 21, 22 de la contrefiche principale 20.

La première partie 102 du carénage articulé 101 est quant à elle rigidement solidaire du bras 22 de la contrefiche principale 20, en étant fixée au moyen de boulons 115 à une attache associée 105 qui comporte deux éléments de pince en forme de C, dont l'oblicité correspond à celle de l'extrémité du bras de contrefiche 22, ainsi qu'un élément de fixation 105' associé à une traverse du bras précité 22.

Sur la figure 6, on a illustré les deux parties de charnières 104.2, 104.3, respectivement associées aux première et seconde parties 102, 103 du carénage articulé 101.

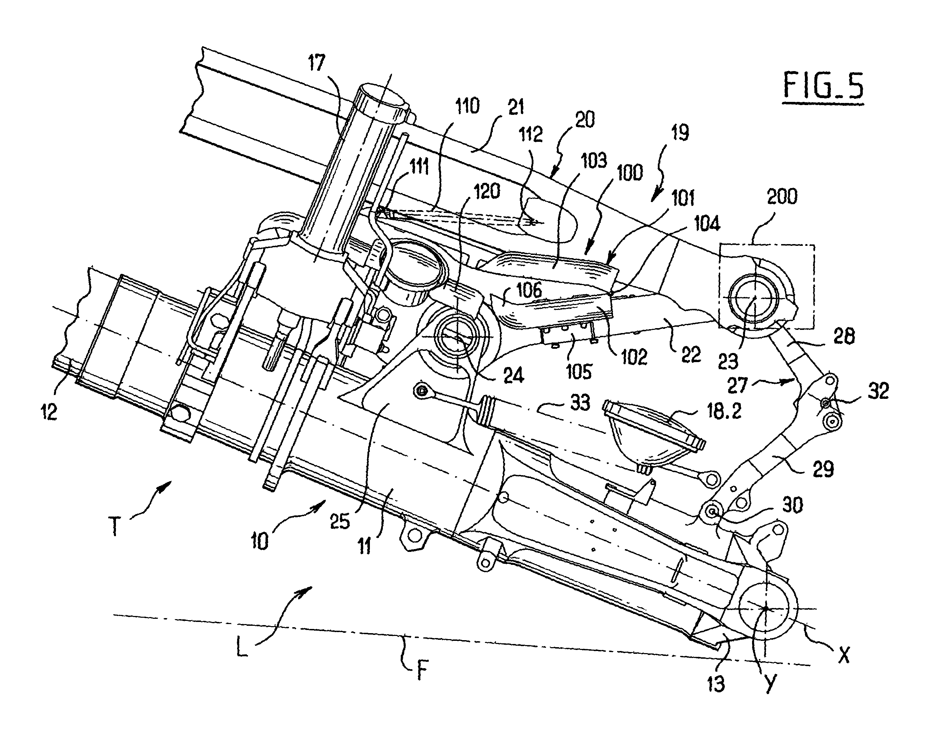

Si l'on observe les figures 2, 4 et 5, on peut apprécier trois positions du parallélogramme articulé constitué par les quatre articulations 23, 104, 111, 112. Ce parallélogramme articulé est très aplati dans les deux positions extrêmes, qui sont la position train bas de la figure 2 et la position train haut de la figure 5. Ces figures 2, 4 et 5 permettent également d'apprécier le mouvement de pivotement de la bielle de liaison 110 autour de son articulation 112 sur l'attache 113 de liaison au bras supérieur, et autour de son point 111 d'accrochage à la seconde partie 103 du carénage articulé 101. Dans la pratique, ce mouvement de pivotement sera légèrement inférieur à un angle plat, et en particulier correspondra à une plage voisine de 150° entre les deux positions de la bielle de liaison 110 correspondant aux positions train haut et train bas de la jambe de train 10.

La bielle de liaison 110 pourra être de longueur constante, ou en variante réglable en longueur ou être une bielle élastique à ressort. Dans le cas d'une bielle réglable en longueur, la longueur sera adaptée lors du premier réglage du train pour que le mouvement s'effectue sans interférence ni frottements, puis ensuite cette longueur sera figée par blocage des éléments concernés.

Sur la figure 5, on a illustré schématiquement en 200 un boîtier d'accrochage qui sert à verrouiller le train en position train haut dans sa soute L, la totalité du train T étant au-dessus de la paroi limite du fuselage F. On constate que le carénage articulé 101 ne vient aucunement gêner l'accessibilité de la liaison d'articulation entre les deux bras 21, 22 de la contrefiche principale 20, cette articulation étant précisément celle que vient attraper le crochet du boîtier d'accrochage 200.

Les première et seconde parties 102, 103 du carénage articulé 101 seront de préférence conformées avec des bords relevés venant épouser les éléments adjacents de la zone d'articulation protégée. On constate en particulier sur les figures 1 et 2 qu'en position train bas, les deux parties complémentaires 102, 103 du carénage articulé 101 sont sensiblement dans le prolongement l'une de l'autre.

On est ainsi parvenu à réaliser un carénage exempt de parties saillantes qui seraient génératrices de sifflements indésirables, tout en étant compatible avec la cinématique de relevage du train. Comme cela est visible sur les figures 1 et 2, le béquet inférieur 106 de la première partie 102 du carénage articulé 101 vient compléter le carénage fixe 120 pour envelopper complètement la zone d'articulation du bras inférieur 22 de la contrefiche principale 20. Les carénages 101 et 120 constituant le système autonome de carénage aéroacoustique 100, permettent de réduire considérablement les bruits aérodynamiques qui pourraient être occasionnés en position train bas.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Train d'atterrissage d'aéronef à jambe de train relevable, dont la jambe (10) comporte un caisson (11) à tige télescopique (12) qui est articulé sur une structure d'aéronef pour pivoter entre une position train haut et une position train bas par l'actionnement d'un vérin de manoeuvre associé (14), ledit caisson étant en outre relié à la structure d'aéronef par des éléments de contreventement articulés (19) qui comprennent une contrefiche (20) dont un bras supérieur (21) est articulé sur la structure d'aéronef et un bras inférieur (22) est articulé sur un appendice associé (25) du caisson (11) de la jambe de train, ledit train comportant en outre un système de carénage aéroacoustique (100) comprenant un carénage articulé (101) en deux parties complémentaires (102, 103) reliées l'une à l'autre par une articulation (104), **caractérisé en ce que** le carénage articulé (101) du système de carénage aéroacoustique (100) est agencé pour recouvrir, lorsque la jambe (10) est en position train bas, l'avant de la zone d'articulation entre les bras supérieur (21) et inférieur (22) de la contrefiche (20), ledit carénage articulé (101) comprenant à cet effet deux parties complémentaires (102, 103) articulées entre elles au niveau d'une articulation (104) dont l'axe est parallèle à l'axe (23) de la partie d'articulation entre lesdits bras (21, 22) de la contrefiche (20), dont une première partie (102) qui est rigidement solidaire du bras inférieur (22) de la contrefiche (20), et une seconde partie (103) qui est reliée par une bielle (110) au bras supérieur (21) de ladite contrefiche.

2. Train d'atterrissage selon la revendication 1, **caractérisé en ce que** les quatre articulations concernées (23, 104, 111, 112)des parties complémentaires (102, 103), de la bielle de liaison (110), et des bras (21, 22) de la contrefiche (20) sont agencées pour former un parallélogramme articulé.

3. Train d'atterrissage selon la revendication 1 ou la revendication 2, **caractérisé en ce qu'**en position train bas, la première partie (102) du carénage articulé (101) recouvre la partie basse du bras inférieur (22) de la contrefiche (20), la partie haute dudit bras inférieur et la partie basse du bras supérieur (21) de ladite contrefiche étant quant à elles recouvertes par la seconde partie (103) dudit carénage articulé.

4. Train d'atterrissage selon la revendication 3, **caractérisé en ce qu'**en position train bas, la première partie (102) du carénage articulé (101) se termine par un bord relevé (106) enveloppant en partie la zone d'articulation du bras inférieur (22) de la contrefiche (20), l'autre partie de ladite zone d'articulation étant quant à elle recouverte par un carénage rigide (120) associé au caisson (11) de la jambe de train et faisant également partie du système de carénage aéroacoustique (100).

5. Train d'atterrissage selon la revendication 3, **caractérisé en ce que** la seconde partie (103) du carénage articulé (101) présente un bombement central (107) qui, en position train bas, enveloppe l'articulation entre les deux bras (21, 22) de la contrefiche (20).

6. Train d'atterrissage selon la revendication 5, **caractérisé en ce que** la seconde partie (102) du carénage articulé (101) présente, du côté intérieur, des raidisseurs longitudinaux (108) concernant au moins la zone du bombement central (107).

7. Train d'atterrissage selon la revendication 2, **caractérisé en ce que** la bielle de liaison (110) est articulée entre un point d'extrémité (111) de la seconde partie (103) du carénage articulé (101), et une attache associée (113) fixée sur le bras supérieur (21) de la contrefiche (20) en un point (112) complétant le parallélogramme articulé.

8. Train d'atterrissage selon la revendication 7, **caractérisé en ce que** la bielle de liaison (110) pivote autour de son articulation (112) sur l'attache (113) de liaison au bras supérieur, et autour de son point (111) d'accrochage à la seconde partie (103) du carénage articulé (101), sur une plage d'environ 150° entre les deux positions de ladite bielle correspondant aux positions train haut et train bas de la jambe de train (10).

9. Train d'atterrissage selon la revendication 7 ou la revendication 8, **caractérisé en ce que** la bielle de liaison (110) est réglable en longueur ou est une bielle élastique à ressort.

10. Train d'atterrissage selon l'une quelconque des revendications 1 à 9, **caractérisé en ce qu'**en position train bas, les deux parties complémentaires (102, 103) du carénage articulé (101) sont sensiblement dans le prolongement l'une de l'autre.

## Patentansprüche

1. Flugzeugfahrwerk mit einziehbarem Fahrwerkbein, wobei das Bein (10) ein Rohr (11) mit Teleskopstange (12) umfasst, das an einer Flugzeugstruktur angelenkt ist, um sich durch die Betätigung eines dazugehörigen Betätigungszylinders (14) zwischen einer ausgefahrenen Position und einer eingefahrenen Position zu verschwenken, wobei das Rohr ferner mit der Flugzeugstruktur durch angelenkte Windverstrebungselemente (19) verbunden ist, die eine Strebe (20) umfassen, von der ein oberer Arm (21) an der Flugzeugstruktur und ein unterer Arm (22) an einem dazugehörigen Ansatzstück (25) des Rohres (11) des Fahrwerkbeines angelenkt sind, wobei das Fahrwerk ferner ein aeroakustisches Verkleidungssystem (100) enthält, das eine angelenkte Verkleidung (101) aus zwei komplementären Teilen (102, 103) umfasst, die miteinander über eine Gelenkverbindung (104) verbunden sind, **dadurch gekennzeichnet, dass** die angelenkte Verkleidung (101) des aeroakustischen Verkleidungssystems (100) derart angeordnet ist, dass sie, wenn das Bein (10) in der ausgefahrenen Position ist, die Vorderseite des Gelenkverbindungsbereichs zwischen dem oberen Arm (21) und dem unteren Arm (22) der Strebe (20) abdeckt, wobei die angelenkte Verbindung (101) zu diesem Zweck zwei komplementäre Teile (102, 103) umfasst, die im Bereich einer Gelenkverbindung (104) aneinander angelenkt sind, deren Achse parallel zur Achse (23) des Gelenkverbindungsabschnittes zwischen den genannten Armen (21, 22) der Strebe (20) ist, darunter einen ersten Teil (102), der starr mit dem unteren Arm (22) der Strebe (20) verbunden ist, und einen zweiten Teil (103), der über eine Stange (110) mit dem oberen Arm (21) der genannten Strebe verbunden ist.

2. Fahrwerk nach Anspruch 1, **dadurch gekennzeichnet, dass** die vier betreffenden Gelenkverbindungen (23, 104, 111, 112) der komplementären Teile (102, 103), der Verbindungsstange (110) und der Arme (21, 22) der Strebe derart angeordnet sind, dass sie ein Gelenkparallelogramm bilden.

3. Fahrwerk nach Anspruch 1 oder Anspruch 2, **dadurch gekennzeichnet, dass** in der ausgefahrenen Position der erste Teil (102) der angelenkten Verkleidung (101) den unteren Teil des unteren Armes (22) der Strebe (20) abdeckt, wohingegen der obere Teil des genannten unteren Armes und der untere Teil des oberen Armes (21) der genannten Strebe von dem zweiten Teil (103) der angelenkten Verkleidung abgedeckt werden.

4. Fahrwerk nach Anspruch 3, **dadurch gekennzeichnet, dass** in der ausgefahrenen Position der erste Teil (102) der angelenkten Verkleidung (101) mit einem hochgebogenen Rand (106) abschließt, der den Gelenkverbindungsbereich des unteren Armes (22) der Strebe (20) zum Teil verhüllt, wohingegen der andere Teil des genannten Gelenkverbindungsbereichs von einer starren Verkleidung (120) abgedeckt wird, die mit dem Rohr (11) des Fahrwerkbeins verbunden ist und ebenfalls zum aeroakustischen Verkleidungssystem (100) gehört.

5. Fahrwerk nach Anspruch 3, **dadurch gekennzeichnet, dass** der zweite Teil (103) der angelenkten Verkleidung (101) eine zentrale Wölbung (107) aufweist, die in der ausgefahrenen Position die Gelenkverbindung zwischen den beiden Armen (21, 22) der Strebe (20) verhüllt.

6. Fahrwerk nach Anspruch 5, **dadurch gekennzeichnet, dass** der zweite Teil (102) der angelenkten Verbindung (101) auf der Innenseite Längssteifen (108) aufweist, die sich wenigstens über den Bereich der zentralen Wölbung (107) erstrecken.

7. Fahrwerk nach Anspruch 2, **dadurch gekennzeichnet, dass** die Verbindungsstange (110) zwischen einem Endpunkt (111) des zweiten Teils (103) der angelenkten Verkleidung (101) und einem Punkt (112) einer dazugehörigen Halterung (113) angelenkt ist, die an dem oberen Arm (21) der Strebe (20) angebracht ist, wobei der Punkt (112) das Gelenkparallelogramm vervollständigt.

8. Fahrwerk nach Anspruch 7, **dadurch gekennzeichnet, dass** die Verbindungsstange (110) um ihre Gelenkverbindung (112) an der Halterung (113) zur Verbindung mit dem oberen Arm und um ihren Punkt (111) zur Kopplung an den zweiten Teil (103) der angelenkten Verkleidung (101) schwenkt, über einen Bereich von ca. 150° zwischen den beiden Positionen der genannten Stange, die der eingefahrenen Position und der ausgefahrenen Position des Fahrwerkbeins (10) entsprechen.

9. Fahrwerk nach Anspruch 7 oder Anspruch 8, **dadurch gekennzeichnet, dass** die Verbindungsstange (110) längenverstellbar oder eine flexible Stange mit Feder ist.

10. Fahrwerk nach einem der vorhergehenden Ansprüche 1 bis 9, **dadurch gekennzeichnet, dass** sich in der ausgefahrenen Position die beiden komplementären Teile (102, 103) der angelenkten Verkleidung (101) im wesentlichen in ihrer gegenseitigen Verlängerung befinden.

## Claims

1. Aircraft landing gear having a retractable leg, in which the leg (10) comprises a strut (11) with a telescopic rod (12), the strut being hinged to a structure of the aircraft in order to pivot between a gear-up position and a gear-down position under drive from an associated actuator (14), said strut also being connected to the structure of the aircraft via hinged brace elements (19) which comprise a brace (20) having a top arm (21) hinged to the structure of the aircraft and a bottom arm (22) hinged to an appendix (25) associated with the strut (11) of the landing gear leg, the landing gear further including a low-noise fairing system (100) comprising a hinged fairing (101) of two complementary portions (102, 103) connected to each other via a hinge (104), the landing gear being **characterized in that** the hinged fairing (101) of the low-noise fairing system (100) is arranged to cover, in the down position of the landing gear leg (10), the front of the hinged zone between the top and bottom arms (21, 22) of the brace (20), the said hinged fairing (101) comprising for this purpose two complementary portions (102, 103) hinged to each other at a hinge (104) whose axis is parallel to the axis (23) of the hinge portion between said arms (21, 22) of the brace (20), in which a first portion (102) is rigidly secured to the bottom arm (22) of the brace (20), and a second portion (103) is connected via a connecting rod (110) to the top arm (21) of said brace.

2. Landing gear according to claim 1, **characterized in that** the four hinges concerned (23, 104, 111, 112) of the complementary portions (102, 103), of the connecting rod (110), and of the arms (21, 22) of the brace (20), are arranged to form a hinged parallelogram.

3. Landing gear according to claim 2, **characterized in that** in the gear-down position, the first portion (102) of the hinged fairing (101) covers the bottom portion of the bottom arm (22) of the brace (20), the top portion of said bottom arm and the bottom portion of the top arm (21) of said brace being covered by the second portion (103) of said hinged fairing.

4. Landing gear according to claim 3, **characterized in that** in the gear-down position, the first portion (102) of the hinged fairing (101) terminates in a raised edge (106) covering part of the hinged zone of the bottom arm (22) of the brace (20), the other part of said hinged zone being covered by a rigid fairing (120) associated with the strut (11) of the landing gear leg and also forming part of the low-noise fairing system (100).

5. Landing gear according to claim 3, **characterized in that** the second portion (103) of the hinged fairing (101) has a central bulge (107) which, in the gear-down position, covers the hinge between the two arms (21, 22) of the brace (20).

6. Landing gear according to claim 5, **characterized in that** the second portion (102) of the hinged fairing (101) presents longitudinal stiffeners (108) on its inside for stiffening at least the central bulge zone (107).

7. Landing gear according to claim 2, **characterized in that** the connecting rod (110) is hinged between an end point (111) of the second portion (103) of the hinged fairing (101), and an associated fitting (113) fixed to the top arm (21) of the brace (20) at a point (112) that completes the hinged parallelogram.

8. Landing gear according to claim 7, **characterized in that** the connecting rod (110) pivots about its hinge (112) on the fitting (113) connecting it to the top arm, and about its point (111) connected to the second portion (103) of the hinged fairing (101) through a range of about 150° between the two positions of said connecting rod corresponding to the up and down positions of the landing gear leg (10).

9. Landing gear according to claim 7 or claim 8, **characterized in that** the connecting rod (110) is adjustable in length or is a resilient rod including a spring.

10. Landing gear according to any one of claims 1 to 9, **characterized in that** in the gear-down position, the two complementary portions (102, 103) of the hinged fairing (101) lie substantially in line one with the other.
